# EUROPEAN PATENT APPLICATION

(11) **EP 0 969 073 A2**
(43) Date of publication of application: **05.01.2000**
(21) Application number: 99112271.4
(22) Date of filing: 25.06.1999
(51) Int. Cl.: C10B 1/04, C10B 13/00, C10B 53/00

(54) **Method and apparatus for the disposal and energy conversion of used tyres**

(30) Priority: 02.07.1998 IT GE980058
(71) Applicant: A.M.I. Azienda Multiservizi Intercomunale- Consorzio, 40026 Imola Province of Bologna (IT); Cappelli, Fabio, 40068 San Lazzaro Di Savena Province of Bologna (IT); Mongardi, Vittorio, 40026 Imola Province of Bologna (IT); Ratta', Mario, 51017 Pescia Province of Pistoia (IT)
(72) Inventor: Cappelli, Fabio, 40068 San Lazzaro Di Savena, Bologna (IT); Lorenzi, Loris, 40026 Imola, Province of Bologna (IT)
(74) Representative: Porsia, Dino, Dr.

(57) **Abstract**

The mass of tyres placed in a reaction tower (1) and closed off from the exterior is ignited at the bottom by means of a burner (10), and when the pressure in this tower reaches a predetermined value the said mass is heavily compressed and the gases resulting from the process are evacuated via an electric fan (27) and directed to at least one condensing and cleaning unit (100). As a result of the compression and of the fact that the process is performed in an oxygen-lean environment, the tyres undergo a process of autopyrolysis, at an average operating temperature of about 150°C, resulting in the formation of hydrocarbons and with a limitation of pollutants that are eliminated in the final filtering unit (100). A separate lower circuit (41, 43) allows for the possibility of controlling a uniformly distributed admission of ambient air over the base of the reaction tower.

## Description

The disposal of used tyres from motor vehicles is a serious problem in today's world, and still resists solution, primarily because of the difficulty of controlling the emission of pollutants that can be produced by the disposal of such a product using high temperatures.

The invention proposes the disposal of tyres, both car tyres and medium-sized tyres, by a process of autopyrolysis, in an oxygen-poor environment and with adequate compression, in order to keep the pyrolysis temperature to values of about 150°C by greatly reducing the pollutants produced by such a transformation. The disposal of tyres by the present method produces oily substances and gaseous components of products of relatively low molecular weight which can be reused as fuels or for other purposes. If desired, some of the heat produced by the pyrolysis may also be recovered.

The features of the present apparatus and of its method of operation, and the advantages which it provides, will become clear in the following description of a preferred embodiment of this apparatus, which is illustrated purely by way of non-restrictive example, in the figures of the attached sheets of drawings, in which:
- Fig. 1 shows the apparatus in plan view from above and with parts in section in order to show the internal components;
- Figs. 2 and 3 show respective details of the apparatus viewed on the section planes marked II-II and III-III in Figure 1;
- Figs. 4 and 5 show other details of the apparatus sectioned on IV and V-V, respectively, as shown in Figure 2;
- and Figs. 6 and 7 show other details of the means for closing the side of the reaction tower of the apparatus, viewed in plan view from above and in side elevation, respectively, with parts in section.

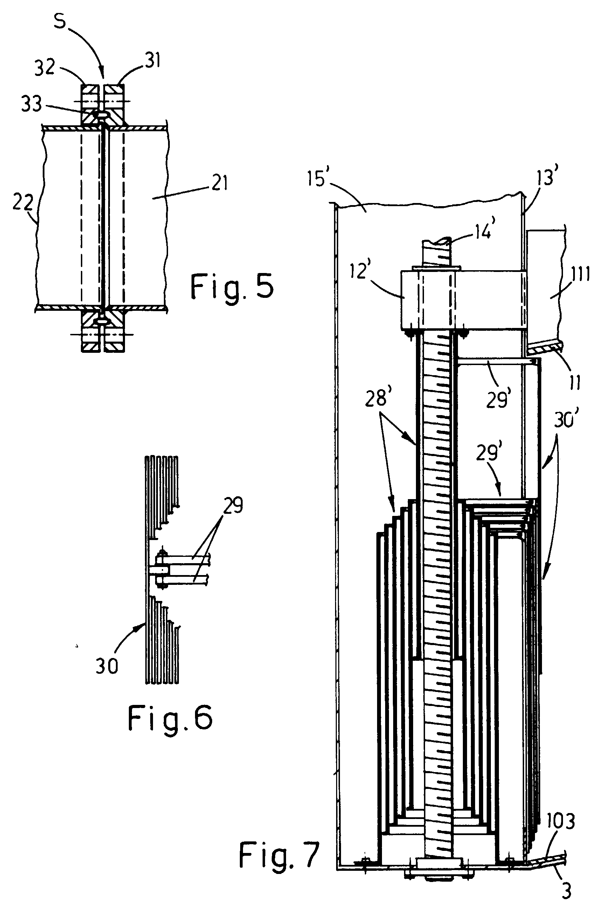

As the figures show, the apparatus comprises a tower 1 of suitable dimensions and preferably vertical, cylindrical and round-sectioned, constructed in steelwork and suitably reinforced externally by a horizontal band bearing the general reference 2 and by evenly distributed uprights 102 which extend downwards to form legs so that the tower is raised off the ground. The tower has a fixed base 3, preferably conical and converging upwards, with external reinforcing ribs 3' and with a window 4 in the shape of a sector of a circle (Fig. 4) connected to the loading mouth of a screw conveyor 5 which stands on the ground on its own legs 105 and which is closed at the end supporting the geared drive motor 6 while at the other end it has a closing cover 7 which can if necessary be removed by suitable means (which are not shown). Resting on the base 3 is a complementary base 103 keyed axially to a vertical shaft 8 that passes rotatably and in a laterally sealed manner through the said base 3 and that projects below it for connection to a geared motor 9 with two directions of rotation connected to the processor which controls the automatic operation of the plant. The rotating base 103 contains a window 104 in the shape of a sector of a circle identical to the window 4 of the fixed base, so that these windows can be moved into or out of alignment with each other, with corresponding opening or closing of the screw conveyor 5 vis-à-vis the reaction tower 1 (see below).

Mounted inside the tower 1 a short distance off the movable base 103 and parallel to the conveyor 5 is the lance of a burner 10, with a nonreturn valve, which is useful for purposes indicated later.

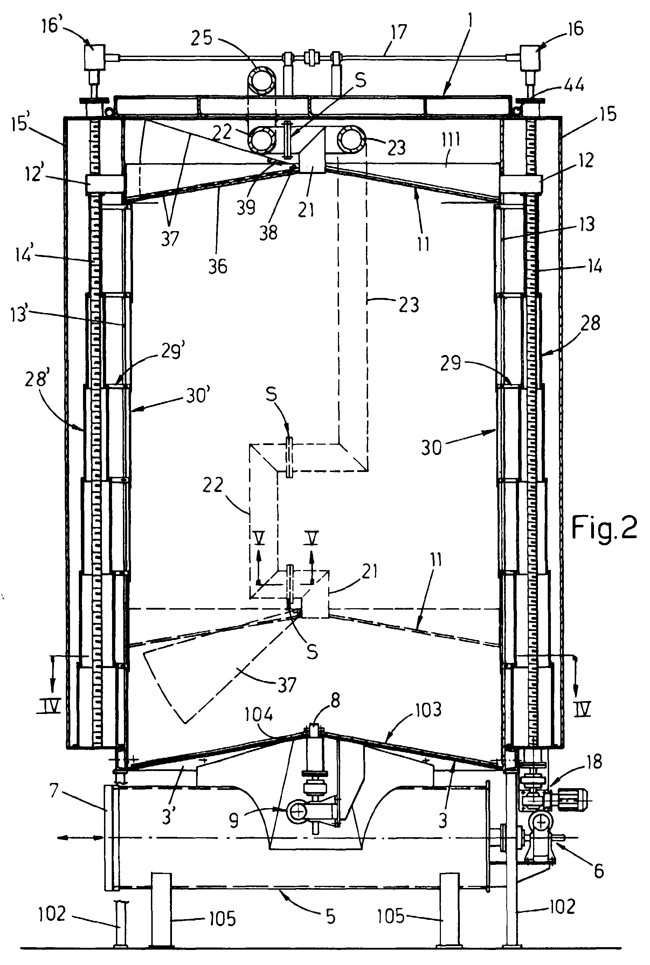

Moving axially inside the tower 1 is a piston or roof 11 of a conical shape complementary to the shape of the double base 3, 103, above which are stiffening ribs 111. In angularly equidistant positions it has at least two peripheral extensions 12, 12' (Fig. 2) which project out on the outside of vertical slots 13, 13' in the side wall of the tower and which, by means of respective nuts, engage with identical vertical screws 14, 14' supported rotatably at their ends by semicylindrical enclosures 15, 15' attached to the outside of the tower to close the said slots. The ends of the screws 14, 14' pass in a sealed manner out of the said enclosures for connection to an upper synchronizing shaft 17 by angular drives 16, 16' and for connection at the bottom to a geared drive motor 18 with two directions of rotation, by means of which the roof 11 can be raised and lowered. Means are provided to close the slots 13, 13' and to protect the screws 14, 14', or at least those parts of the screws which are situated below the movable cover 11. These means include, for example, telescopic tubes 28, 28' connected to each other as in a telescope. Their diameters increase towards the bottom and they encircle the portions of the screws below the cover 11, these tubes being fixed at the bottom end to the base of the covers 15, 15' and at the top end to the extensions 12, 12'. As illustrated in Figure 2 and in the details of Figures 6 and 7, small arms 29, 29' project out from the upper end of each section of the telescopic tubes 28, 28', pass through the slots 13, 13' and carry respective hinged vertical panels 30, 30' hanging down on the inside of the tower 1. These panels overlap each other and are of the correct dimensions to block off a corresponding section of the abovementioned slots 13, 13' (see also Fig. 4).

In the roof 11 is a manhole which is normally closed by a removable hatch 19, and a similar manhole with a removable hatch 20 is provided at the side near the bottom of the tower 1. These are to enable the internal chamber of the tower to be inspected, both below and above the movable cover 11.

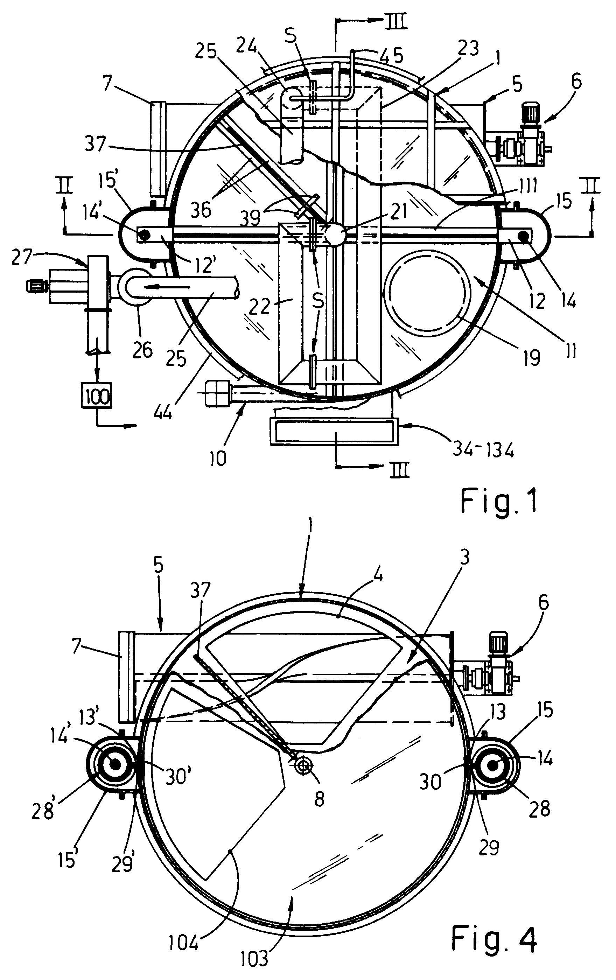

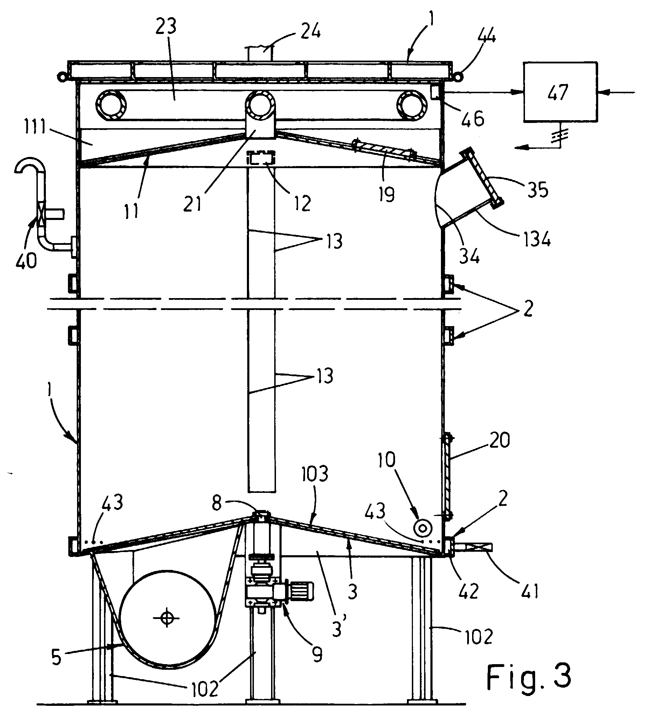

As can be seen in Figures 1 and 2, the cover 11 has a central hole to which is leaktightly welded the end of a right-angled pipe 21 located above this cover. A cylindrical joint S (see below) connects the latter pipe to the end of a U-shaped pipe 22 which is slightly shorter than the radius of the tower 1 and to which another joint S joins a second U-shaped pipe 23 which is slightly shorter than the diameter of the tower 1 and whose other end is joined by a joint S to a right-angled pipe 24 from which a vertical branch passes out from the fixed top of the tower 1 for connection to a pipe 25 leading to the intake of an electric fan 27 after passing through an intermediate control valve 26. The exhaust of the electric fan 27 is connected to at least one condensing and filtering unit 100, of any suitable type (see below). When the movable cover 11 is fully raised as in Figure 3, the pipes 22 and 23 are in the contracted position and are coplanar, as in Figures 1 and 3, whereas when the same cover 11 is in the fully lowered position the said pipes are in the extended position indicated with dashes in Figure 2. As Figure 5 shows, the joints S comprise, for example, a first flange 31 welded to the end of one of the pipes and a second flange 32 mounted rotatably and with the function of a collar on the edged end of the next pipe, the two flanges being clamped together by means of bolts, possibly with cup springs (not illustrated), with a sealing ring 33 of suitable material being placed between the two flanges.

As can be seen in Figure 3, the apparatus is provided on its lateral surface with a window 34 at a height such that it is immediately beneath the cover 11 when the latter is fully raised and an inlet 134 is fitted to this window and closed by a removable cover 35. The dimensions of the inlet are such as to allow the introduction into the tower of tyres for processing.

As can be seen in Figures 1, 2 and 4, the cover 11 includes a radial slot 36 that is basically parallel to that side of the window 4 that is nearest the discharge end of the conveyor 5. A spatula 37, e.g. in the shape of a sector of a circle, is mounted in this slot, is hinged by its vertex to the highest point 38 of this slot 36 and is fitted with extensions 39 which limit its pivoting in the downward direction and rest on the cover 11 when there are no tyres in the tower so that the spatula drops under gravity beneath the cover, as illustrated with dashed lines in Figure 2, whereas when the tower is operating, the same spatula is lifted up out of the way above the cover 11, as illustrated in this same Figure 2 in solid lines.

The apparatus is completed by the following items:
- a compensating valve 40 in the upper half of the tower;
- a valve 41 that interrupts the connection to the atmosphere of an annular manifold 42 formed by one of the annuli 2 of the tower stiffening band and containing accurately sized holes 43 uniformly distributed all the way around the circumference;
- a firefighting circuit comprising, for example, a coil 44 at the top end of the tower, running around the sides of the tower and comprising a pipe 45 which injects the firefighting product into the discharge pipe 25 of the tower;
- and sensors shown diagrammatically at 46 in Figure 3, suitable distributed and located, including in the unit 100, for detecting the various operating parameters of the apparatus, such as e.g. pressure, compression, temperature, the presence of oxygen or of other components, the position of the roof 11 and of the movable base 103 and others; these being connected to a control panel 47 equipped with an electronic processor which, via interfaces, controls the operation of the apparatus in accordance with a predetermined working program.

The apparatus as described above works as follows: at the start of each cycle the roof 11 is in the raised position as in Figures 2, 3; the movable base 103 is in the nonaligned position of the windows 4, 104, as in Figure 4; the screw conveyor 5 is stationary and its hatch 7 is sealed shut; the valves 26, 40 and 41 are closed and the hatch 35 is open. The tyres that are to be processed are introduced through the mouth 34, 134 and the tower is filled. To ensure correct filling of the tower there may be alternate rotation of the movable base 103, to prevent even partial overlap between the windows 4, 104.

When the tower is full the hatch 35 of the feed mouth is closed and the burner 10 is lit so as to ignite the bottom of the mass of tyres, while the base 103 may rotate partially for more satisfactory distribution of the burn. This phase may last for some seconds, for example, after which the burner is extinguished. Once combustion has begun, the internal pressure of the tower is allowed to rise to about 1.5-1.8 bar, after which the movable roof 11 is lowered in order to apply powerful compression to the mass of tyres and to maintain this condition for the whole of the working cycle. After this phase the valve 26 is opened and the extractor 27 is started so as to remove from the tower the gases produced by the heat treatment of the tyres, which are pressed at an average temperature of about 100-150°C in a highly oxygen-deficient environment. A very small amount of oxygen will however be provided by the controlled opening of the valve 41 at the base.

Inside the tower 1 the mass of tyres is subjected to a treatment of autopyrolysis and the gases produced and evacuated by the electric fan 27, and subsequently condensed and cleaned in the condensate filter 100, are oily substances, gaseous components of products of relatively low molecular weight and a few carbon-containing substances of little importance because of the low level of oxygen available for reaction. The product which is obtained at the output of the condensate filter 100 is basically a hydrocarbon with the following formula: 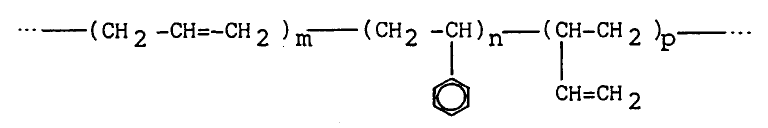 The unit 100 condenses the hot gases evacuated from the tower 1 and also cleans them, removing pollutants, such as the HCl originating in small amounts from the manufacturing processes of the new tyre and the SOx present in the gasification reaction. Suitable means of known type will be used to eliminate the heavy metals from the product resulting from the condensation. Because the gases that leave the unit 100 include no chlorine-containing components, it is unnecessary to provide means for monitoring for the presence of dioxins, especially as the system operates at a much lower temperature than the 250-350°C which would give rise to formation of dioxins or furans, as explained in the report RT/PAS/89/1 by the ENEA [Italian National Committee on Nuclear Energy and Alternative Energy].

As regards the value of the SOx emissions, the sulphur content of modern tyres would, in the case of incineration, produce emission values of well above the 300 mg/Sm³, required under current legislation (Italian Presidential Decree 203/88). In the plant described in this text, because the operating temperature is very low and because the environment employed is depleted of oxygen for reaction, the SOx emissions will be extremely limited. In any case, because of the presence of moisture in the condensing and filtering unit 100, it will be possible to eliminate sulphurous discharges by forming sulphurous and sulphuric acids, which are easy to remove as in any washing tower for inorganic water-soluble compounds.

In the normal operation of the plant, NOx emissions should be at a value of about 65 mg/Sm³, which is well below the 400 mg/Sm³ required by Italian Presidential Decree 203/88. In any case, means will be provided to monitor NOx emissions and inject water at the outlet should anomalous values of this parameter develop.

In the normal operation of the plant, CO emissions should be about 60 mg/Sm³, which is well below the 100 mg/Sm³ required by Italian Presidential Decree 203/88.

At the conclusion of the apparatus work cycle, when the mass of tyres is used up and the cover 11 has reached its lower limit position, with the operating temperature falling below the abovementioned values, valve 40 is open to restore the tower 1 to atmospheric pressure, after which the discharge 7 of the conveyor 5 is opened, this conveyor is started up and the movable base 103 rotates so that its window 104 is lined up cyclically with the window 4 of the fixed base 3 and allow the evacuation of the residues of the reaction through the said conveyor, while the spatula 37 drops down in front of the window 4 and facilitates the said evacuation of the residues. When the tower is finally empty, the various components of the apparatus are repositioned ready for a new work cycle.

The tower 1 will be externally and internally insulated, and/or means may be provided to recover at least some of the heat produced by the pyrolysis of the tyres, possibly for the purpose of maintaining the internal operating temperature of the tower at the predetermined values. In this case the tower may be constructed externally to function as a heat exchanger. The details of such construction can be devised and readily realized by those skilled in the art.

## Claims

1. Method for the disposal and energy conversion of used tyres, characterized by the following operating steps:
- a suitable quantity of the tyres is fed into a chamber (1) which is then sealed off from the exterior;
- the stack of tyres is then ignited in one region;
- when the pressure inside the reaction chamber reaches a suitable level, the mass of tyres is subjected to a suitable degree of compression in such a way that the regions of this mass that are remote from the said point of ignition are brought progressively towards this point and compression is maintained throughout the cycle at values such that the reaction temperature of the mass remains at a defined value necessary to ensure autopyrolysis of the mass;
- the gases produced inside the reaction chamber are removed by suction from that region of the mass which is remote from that first ignited;
- the gases extracted from the reaction chamber are condensed and cleaned to allow recovery from these of hydrocarbons that can be reused and for elimination of all pollutants before discharge into the atmosphere;
- and when the treated mass is used up and the operating temperature drops, the processing chamber is pressurized to atmospheric pressure and the residual parts of this mass are evacuated and the plant is prepared to repeat the operating cycle.

2. Method according to Claim 1, in which the mass of tyres is arranged so as to form a vertical or substantially vertical stack and the said mass is initially ignited at the bottom.

3. Method according to Claim 1, in which the bottom of the mass which is initially ignited is kept stationary while the compression to which the mass is subjected is such as to lower the upper boundary of the mass.

4. Method according to Claim 1, in which the step of igniting the mass of tyres lasts for a matter of seconds and such ignition is brought about by means of the heat supplied by the lance of a burner running on gas oil or a combustible gas or a burner of equivalent type.

5. Method according to Claim 1, in which the step of compressing the ignited mass of tyres begins when the pressure in the reaction chamber reaches approximately 1.5-1.8 bar.

6. Method according to Claim 1, in which the average temperature of transformation of the mass of tyres under compression is approximately 100-150°C.

7. Method according to Claim 1, characterized in that at that end of the mass of tyres which is initially ignited, it is possible to carry out controlled and uniformly distributed injection of ambient air drawn in by the vacuum created in the reaction chamber by the suction taking away the reaction gases towards the final step of condensation and cleaning.

8. Method according to Claim 1, characterized in that it includes partial recovery of the heat energy produced by the pyrolysis of the tyres, partly in order to stabilize the temperature of pyrolysis of the tyres at the desired value.

9. Apparatus for the disposal and energy conversion of tyres, characterized in that it comprises:
- a reaction tower (1) which is preferably cylindrical, of round section, preferably vertical, closed at both ends, and reinforced externally by a suitable horizontal band (2) and a vertical band (102), which latter extends down and forms legs on which the tower stands on the ground, the said tower being provided, higher up the lateral surface, with a mouth (34) of appropriate dimensions for the introduction of the tyres into the tower, the mouth being then sealable by suitable means (35);
- inside the tower is an axially movable piston or cover (11) connected to axial drive means (12, 12', 18, 18') and which in a raised position is above the said tower loading mouth;
- a flexible or jointed pipe (21, 24) situated inside the tower, above the said movable cover (11) and connected at one end to a hole in the centre of this cover and at the other to a fixed pipe (25) outside the tower and connected to the intake of an electric fan (27), via an intermediate shut-off valve (26), the said electric fan being designed to discharge the extracted gases into a final condensing and cleaning unit (100) which in turn discharges into the atmosphere;
- on the base of the tower is a window (4) normally closed by a servocontrolled closure member (103; 8, 9) and leading to a motorized conveyor (5, 6), preferably screw type, whose discharge end is initially sealed shut by suitable removable means (7), whereas it is opened at the end of the cycle, with the opening of the said window, with activation of the said conveyor and with activation of suitable means that assist the evacuation from the tower of the residues of the transformed tyres;
- in a position remote from the said window (4) which connects with the discharge conveyor (5), the lance of a burner (10) of any appropriate type is housed on the base of the tower for the initial ignition of the mass of tyres due to be processed;
- sensors (46) for monitoring the various operating parameters of the apparatus, connected to a panel (47) with an electronic processor which monitors and ensures the best operation of the said apparatus;
- and valve means (40) for pressurizing the interior of the tower to atmospheric pressure at the end of the operating cycle, in order that the discharge mouth of the screw conveyor can be opened.

10. Apparatus according to Claim 9, in which the movable upper cover (11) is of a conical shape diverging downwards and complementing the shape of the base (3) of the tower (1) containing a window (4) in the shape of a sector of a circle, this window being connected to the loading mouth of the screw conveyor (5) which evacuates the final residues of the processed tyres, on which base rests an additional complementary base (103) containing a window in the shape of a sector of a circle (104) identical to that of the fixed base and this upper base is keyed axially to a vertical shaft (8) which passes out leaktightly below the tower and is connected to a geared drive motor (9), means being provided to ensure that during the apparatus operating cycle the window of the movable base (103) is offset from the window (4) of the fixed base, so that the latter window is closed by the said movable base, whereas at the end of the cycle the two windows are lined up with each other to allow the process residues to be discharged.

11. Apparatus according to Claim 10, in which the geared motor (9) that drives the said movable base (103) has two directions of rotation and means are provided to ensure that in the initial phase of loading the tower (1) the movable base is rotated alternately in both directions, without ever aligning its own window with that of the fixed base, in order to ensure uniform loading of the tyres in the said reaction tower.

12. Apparatus according to Claim 10, in which means are provided for partially rotating the said movable base (103) during the phase of ignition of the mass of tyres, in order to achieve uniform ignition.

13. Apparatus according to Claim 10, characterized in that the final phase in which the tower is discharged of the process residues, the said movable base is rotated intermittently or continuously, in one direction, while above and to the side of the window of the fixed base turned towards the discharge mouth of the screw conveyor there is positioned, by gravity, a spatula (37) in the shape of a sector of a circle set on its edge, housed in a radial opening (36) in the movable cover (11), hinged at its apex (38) at the centre of the cover and equipped with transverse stops (39) which limit its protrusion beneath the said radial opening but which allow it to be raised fully out of the way when the tower is filled with tyres and the tyres are pressed by the movable cover, arrangements being made so that during the said final phase of discharge of the residues, the said spatula positions itself immediately downstream of the window of the fixed base, in order to arrest the residues over this window as they are brought to it by the rotation of the movable base and thus assist the evacuation of these residues.

14. Apparatus according to Claim 9, in which the movable base (11) comprises around its perimeter two or more angularly equidistant extensions (12, 12') that pass through vertical slots (13, 13') in the side wall of the tower (1) and are engaged by respective nuts with corresponding vertical screws (14, 14') supported at each end by enclosures (15, 15') which close the said slots from the outside and from which the screws project at their ends so as to be connected together by angular drives (16) and a synchronizing shaft (17) and so as to be connected to a geared drive motor (18), the said slots being closed on the inside of the tower and in the portion located underneath the movable cover (11) by vertical overlapping panels (30, 30'), each of which is hinged at the top to a short arm (29, 29') that passes through the slots and is fixed cantilever-fashion to the top of telescopic tubes (28, 28'), which tubes are connected together in the manner of a telescope, surround the said screws in respect of the portion below the cover, are of increasing diameter in the downward direction and are fixed at the bottom end to the said enclosures (15, 15') while at their upper ends they are fixed to the said peripheral extensions (12, 12') of the movable cover; the whole being such as to prevent extrusion through the said slots of the material to be processed.

15. Apparatus according to Claim 9, characterized in that at the lower end of the tower (1) is an annular manifold (42) containing accurately sized holes (43) distributed uniformly all the way around the circumference of the said tower, with a valve means (41) connected to this manifold through which it is possible to control a precise flow of air into the tower.

16. Apparatus according to the preceding claims, including at least one first firefighting system (44) on the outside of the tower (1) and at least one second firefighting system in the pipe (25) through which the gases are evacuated from the said tower.

17. Apparatus according to the preceding claims, in which the tower is externally and internally insulated and/or can be employed as a generator of heat energy for recovery via a heat exchange circuit.

18. Apparatus according to Claim 9, in which the movable cover (11) is fitted with a normally closed trapdoor (19) large enough for a man to pass through, and a normally closed hatch (20), also large enough for a man to pass through, is provided in the side at the lower end of the tower (1), to permit internal inspection of the said tower, of the areas both below and above the said movable cover.
